(19) Europäisches Patentamt
European Patent Office
Office européen des brevets

(11) EP 0 675 164 B1

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int Cl.6: **C08L 51/00**, C08L 23/08, C08L 23/02, C08L 25/12, C08J 5/18

(21) Anmeldenummer: **95104122.7**

(22) Anmeldetag: **21.03.1995**

(54) **Thermoplastische Formmassen aus einem Pfropfcopolymerisat und einem Olefin-Copolymeren**

Thermoplastic moulding compositions from a graft copolymer and an olefine copolymer

Masses à mouler thermoplastiques à base d'un copolymère greffé et d'un copolymère d'oléfine

(84) Benannte Vertragsstaaten:
**AT BE CH DE ES FR GB IT LI NL**

(30) Priorität: **29.03.1994 DE 4410883**

(43) Veröffentlichungstag der Anmeldung:
**04.10.1995 Patentblatt 1995/40**

(73) Patentinhaber: **BASF AKTIENGESELLSCHAFT**
**67056 Ludwigshafen (DE)**

(72) Erfinder:
- **Niessner, Norbert, Dr.**
  **D-67159 Friedelsheim (DE)**
- **Güntherberg, Norbert, Dr.**
  **D-67346 Speyer (DE)**
- **Fischer, Wolfgang, Dr.**
  **D-67067 Ludwigshafen (DE)**
- **Rosenau, Bernhard, Dr.**
  **D-67434 Neustadt (DE)**

(56) Entgegenhaltungen:
**EP-A- 0 322 632** **EP-A- 0 370 362**
**DE-A- 4 211 415**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 675 164 B1

## Beschreibung

Die vorliegende Erfindung betrifft thermoplastische Formmassen, enthaltend im wesentlichen

(A) 20 bis 99 Gew.-% mindestens eines Pfropfcopolymerisates mit einer Teilchengröße ($d_{50}$-Wert) im Bereich von 60 bis 1500 nm, erhältlich im wesentlichen aus

(a1) 30 bis 90 Gew.-% eines Kerns, erhältlich durch Polymerisation eines Monomerengemisches, bestehend im wesentlichen aus

(a11) 80 bis 99,99 Gew.-% mindestens eines $C_1$-$C_{10}$-Alkylesters der Acrylsäure,

(a12) 20 bis 0,01 Gew.-% eines copolymerisierbaren, polyfunktionellen vernetzend wirkenden Monomeren, und gewünschtenfalls darüber hinaus

(a13) Butadien, Isopren oder ein weiteres copolymerisierbares, monoethylenisch ungesättigtes Monomeres oder deren verträgliche Mischungen, und

(a2) 70 bis 10 Gew.-% einer Pfropfhülle, erhältlich durch Polymerisation eines Monomerengemisches in Gegenwart des Kerns (a1),bestehend im wesentlichen aus

(a21) 50 bis 100 Gew.-% einer Styrolverbindung der allgemeinen Formel (I)

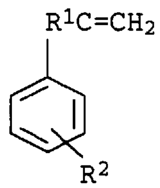

(I)

in der $R^1$ und $R^2$ unabhängig voneinander für Wasserstoff oder $C_1$-$C_8$-Alkyl stehen und/oder eines $C_1$-$C_8$-Alkylesters der Methacryl- oder Acrylsäure,

(a22) 50 bis 0 Gew.-% eines monofunktionellen Comonomeren, und

(B) 80 bis 1 Gew.-% eines Copolymeren, erhältlich aus

I)

40 bis 75 Gew.-% Ethylen,
5 bis 20 Gew.-% Kohlenmonoxid und
20 bis 40 Gew.-% n-Butylacrylat

oder

II)

50 bis 98,9 Gew.-% Ethylen,
1 bis 45 Gew.-% n-Butylacrylat und
0,1 bis 20 Gew.-% Methacrylsäure, Acrylsäure oder Maleinsäure oder eine Mischung aus zwei oder allen dieser Säuren

und

(C) 0 bis 50 Gew.-%, bezogen auf das Gesamtgewicht der Komponenten (A), (B) und (C), eines thermoplastischen Polymerisates, erhältlich durch Polymerisation eines Monomerengemisches, bestehend im wesentlichen aus

(c1) 50 bis 100 Gew.-% eines vinylaromatischen Monomeren und/ oder eines $C_1$-$C_8$-Alkylesters der Methacryl- oder Acrylsäure und

(c2) 50 bis 0 Gew.-% eines monofunktionellen Comonomeren.

Des weiteren betrifft die Erfindung ein Verfahren zur Herstellung der erfindungsgemäßen thermoplastischen Formmassen, deren Verwendung sowie daraus hergestellte Formkörper und Folien.

Die EP-A-526 813 beschreibt Polymerlegierungen aus einem Pfropfpolymerisat mit einem Kern auf der Basis eines vernetzten Alkylacrylates und gegebenenfalls Comonomeren und einer Hülle, erhältlich durch Polymerisation eines vinylaromatischen Monomeren, eines ethylenisch ungesättigten Nitrils und/oder einem Alkyl(meth)acrylat, einem Ethylen-Vinylacetat-Copolymer und einem kautschukartigen Copolymerisat sowie die Verwendung dieser Polymerlegierungen zur Herstellung von tiefziehbaren, flexiblen Folien.

Nachteilig an Folien, hergestellt nach dem in der EP-A-526 813 beschriebenen Verfahren, ist, daß die beschriebenen Mischungen zu Verfärbungen bei der Verarbeitung neigen und ein ungünstiges Verhältnis von Zugfestigkeit zu Reißdehnung aufweisen. Des weiteren zeigen solche Folien bei praxisnaher Verarbeitung ein verstärktes Fogging. Zusätzlich sind für den Aufbau der Formmassen nach der EP-A-526 813 vier Komponenten erforderlich.

Die DE-A-3,149,358 beschreibt thermoplastische Formmassen, erhältlich aus einem Pfropfcopolymerisat mit einem Kern aus einem vernetzten Alkylacrylat und gegebenenfalls Comonomeren und einer Hülle, erhältlich durch Polymerisation eines vinylaromatischen Monomeren und einem ethylenisch ungesättigten Monomeren, und einem Copolymer, erhältlich durch Polymerisation eines vinylaromatischen Monomeren und einem ethylenisch ungesättigten Monomeren. Folien, hergestellt aus diesen thermoplastischen Formmassen, haben den Nachteil, daß sie eine zu geringe Reißdehnung bei gleichzeitig zu hoher Härte aufweisen.

Des weiteren verwendet man Kunststoffolien mit lederartigem Aussehen beispielsweise zur Innenverkleidung von Kraftfahrzeugen. Als Kunststoff wird derzeit üblicherweise PVC eingesetzt, im Gemisch mit verschiedenen Vinylpolymerisaten und Weichmachern. Diese Folien sind bei hohen Temperaturen nicht vollständig alterungsstabil, enthalten flüchtige Bestandteile und sind naturgemäß halogenhaltig (s. DE-A-42 11 415).

Der vorliegenden Erfindung lag daher die Bereitstellung weiterer thermoplastischer Formmassen als Aufgabe zugrunde, die sich zu Folien verarbeiten lassen, die ein ausgewogenes Verhältnis von Reißfestigkeit, Reißdehnung, Weiterreißfestigkeit, Härte und Farbstabilität bei der Verarbeitung aufweisen. Insbesondere sollten Weiterreißfestigkeiten der Folien von mindestens 35 N/mm nach DIN 53515 erreicht werden sowie alterungsstabile, halogenfreie Folien mit einem lederartigen Aussehen, die weniger flüchtige Bestandteile enthalten als entsprechende Folien gemäß dem Stand der Technik.

Demgemäß wurden die eingangs definierten thermoplastischen Formmassen gefunden.

Des weiteren wurde ein Verfahren zu deren Herstellung, ihre Verwendung zur Herstellung von Formkörpern und Folien sowie Formkörper und Folien, hergestellt aus den erfindungsgemäßen thermoplastischen Formmassen, gefunden.

Die erfindungsgemäßen thermoplastischen Formmassen enthalten im wesentlichen

(A) von 20 bis 99, vorzugsweise von 30 bis 98, besonders bevorzugt von 60 bis 95 Gew.-% mindestens eines Pfropfcopolymerisates mit einer Teilchengröße (dso-Wert) im Bereich von 60 bis 1500 nm, erhältlich im wesentlichen aus

(a1) von 30 bis 90, bevorzugt von 40 bis 80, besonders bevorzugt von 50 bis 70 Gew.-% eines Kerns, erhältlich durch Polymerisation eines Monomerengemisches, bestehend im wesentlichen aus

(a11) von 80 bis 99,99, bevorzugt von 90 bis 99,8, besonders bevorzugt von 97 bis 99 Gew.-% mindestens eines $C_1$-$C_{10}$-Alkylesters der Acrylsäure,

(a12) von 20 bis 0,01, vorzugsweise von 10 bis 0,2, besonders bevorzugt von 3 bis 1 Gew.-% eines copolymerisierbaren, polyfunktionellen vernetzend wirkenden Monomers, und gewünschtenfalls darüber hinaus

(a13) bevorzugt von 0 bis 10 Gew.-% Butadien, Isopren oder eines weiteren copolymerisierbaren, monoethylenisch ungesättigten Monomeren, und

(a2) von 70 bis 10, bevorzugt von 60 bis 20, besonders bevorzugt von 50 bis 30 Gew.-% einer Pfropfhülle, erhältlich durch Polymerisation eines Monomerengemisches in Gegenwart des Kerns (a1), bestehend im wesentlichen aus

(a21) von 50 bis 100, bevorzugt von 55 bis 95, besonders bevorzugt von 60 bis 90 Gew.-% einer Styrolverbindung der allgemeinen Formel (I)

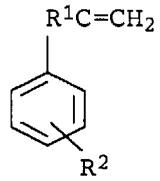

(I)

in der $R^1$ und $R^2$ unabhängig voneinander für Wasserstoff oder $C_1$-$C_8$-Alkyl stehen und/oder eines $C_1$-$C_8$-Alkylesters der Methacryl- oder Acrylsäure und

(a22) von 50 bis 0, bevorzugt von 45 bis 5, besonders bevorzugt von 40 bis 10 Gew.-% eines monofunktionellen Comonomeren, und

(B) von 80 bis 1, bevorzugt von 60 bis 3, besonders bevorzugt von 50 bis 4 Gew.-% eines Copolymeren, erhältlich aus

I)

40 bis 75 Gew.-% Ethylen,
5 bis 20 Gew.-% Kohlenmonoxid und
20 bis 40 Gew.-% n-Butylacrylat

oder

II)

50 bis 98,9 Gew.-% Ethylen,
1 bis 45 Gew.-% n-Butylacrylat und
0,1 bis 20 Gew.-% Methacrylsäure, Acrylsäure oder Maleinsäure oder eine Mischung aus zwei oder allen dieser Säuren

und

(C) von 0 bis 50, bevorzugt von 0 bis 45, besonders bevorzugt von 0 bis 40 Gew.-%, bezogen auf das Gesamtgewicht der Komponenten (A), (B) und (C), eines thermoplastischen Polymerisates, erhältlich durch Polymerisation eines Monomerengemisches, bestehend im wesentlichen aus

(c1) von 50 bis 100, bevorzugt von 55 bis 90, besonders bevorzugt von 60 bis 85 Gew.-% eines vinylaromatischen Monomeren und/oder eines $C_1$-$C_8$-Alkylesters der Methacryl- oder Acrylsäure und

(c2) von 50 bis 0, bevorzugt von 45 bis 10, besonders bevorzugt von 40 bis 15 Gew.-% eines monofunktionellen Comonomeren.

Als $C_1$-$C_{10}$-Alkylester der Acrylsäure (Komponente (all)) kann man Methylacrylat, Ethylacrylat, Propylacrylat, n-Butylacrylat, n-Pentylacrylat, n-Hexylacrylat, n-Heptylacrylat, n-Octylacrylat, 2-Ethylhexylacrylat, n-Nonylacrylat und n-Decylacrylat sowie Mischungen davon einsetzen, vorzugsweise n-Butylacrylat, 2-Ethylhexylacrylat oder Mischungen davon, besonders bevorzugt n-Butylacrylat.

Als copolymerisierbare, polyfunktionelle vernetzend wirkende Monomere setzt man im allgemeinen solche Monomere ein, die zwei, drei oder vier, bevorzugt zwei zur Copolymerisation befähigte Doppelbindungen enthalten, die nicht in 1,3-Stellung konjugiert sind. Solche zur Vernetzung geeigneten Monomere sind beispielsweise Vinylbenzole wie Divinylbenzol und Trivinylbenzol, Diallylmaleat, Diallylfumarat, Diallylphthalat, Triallylcyanurat und Triallylisocyanurat. Als besonders geeignete Monomere für die Komponente (a12) haben sich die Tricyclodecenylacrylate Ia und Ib

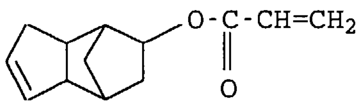

Ia

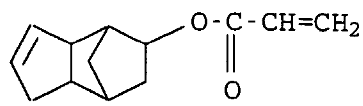

Ib

erwiesen (s. DE-B-1,260,135), die man auch in Form ihrer Mischungen einsetzen kann.

Als Komponente a13 können Butadien oder Isopren eingesetzt werden. Darüber hinaus kommen copolymerisierbare, monoethylenisch ungesättigte Monomere als Komponente a13 in Betracht. Als solche seien beispielhaft genannt:

vinylaromatische Monomere wie Styrol, substituiertes Styrol der allgemeinen Formel I;

Methacrylnitril, Acrylnitril;

Acrylsäure, Methacrylsäure;

$C_1$-$C_4$-Alkylester der Methacrylsäure wie Methylmethacrylat, Ethylmethacrylat, n-Propylmethacrylat, i-Propylmethacrylat, n-Butylmethacrylat, Isobutylmethacrylat, sek.-Butylmethacrylat, tert.-Butylmethacrylat;

$C_1$-$C_4$-Alkylester der Methacryl- oder Acrylsäure, wobei die Alkylreste einfach mit Phenyl- oder Naphthylgruppen substituiert sind, sowie unsubstituiertes oder mit bis zu zwei $C_1$-$C_4$-Alkylgruppen substituiertes Phenol und Naphthol wie Phenylacrylat, Phenylethylmethacrylat, Phenylethylacrylat, Benzylmethacrylat, Benzylacrylat, Phenylpropylmethacrylat, Phenylpropylacrylat, Phenylbutylmethacrylat, Phenylbutylacrylat, 4-Methylphenylacrylat und Naphthylacrylat sowie Phenoxyethylmethacrylat und Phenoxyethylacrylat;

Vinylmethylether. Es können auch verträgliche Mischungen der genannten Monomeren verwendet werden.

Als Styrolverbindung der allgemeinen Formel (I) (Komponente (a21)) setzt man vorzugsweise Styrol, α-Methylstyrol sowie mit $C_1$-$C_8$-Alkyl kernalkylierte Styrole wie p-Methylstyrol oder tert.-Butylstyrol, ein, besonders bevorzugt Styrol und α-Methylstyrol.

Als $C_1$-$C_8$-Alkylester der Methacryl- oder Acrylsäure verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei n-Butylacrylat besonders bevorzugt ist, sowie Mischungen dieser Monomere untereinander als auch mit den Methacrylaten und/ oder Styrolverbindungen der allgemeinen Formel I.

Als monofunktionelle Comonomere (Komponente (a22)) setzt man gewünschtenfalls erfindungsgemäß Monomere, ausgewählt aus der Gruppe bestehend aus Methacrylnitril, Acrylnitril, N-$C_1$-$C_8$-Alkyl-, N-$C_5$-$C_8$-Cycloalkyl- und N-$C_6$-$C_{10}$-Arylsubstituierte Maleinimide wie N-Methyl-, N-Phenyl-, N-Dimethylphenyl- sowie N-Cyclohexylmaleinimid und Maleinsäureanhydrid ein, bevorzugt Acrylnitril.

In einer bevorzugten Ausführungsform setzt man zum Aufbau der Pfropfhülle (a2) eine Mischung von Styrol ("S") und Acrylnitril ("AN") (Molverhältnis S/AN üblicherweise im Verhältnis von 4,5:1 bis 0,5:1, bevorzugt von 2,2:1 bis 0,65:1), Styrol alleine, eine Mischung von Acrylnitril und Methylmethacrylat ("MMA") sowie MMA alleine ein.

Die Herstellung der Komponente (A) erfolgt nach an sich bekannten Methoden, beispielsweise nach der in der DE-A-3,149,358 beschriebenen.

Hierzu wird zunächst der Kern (a1) hergestellt, indem der oder die Acrylsäureester (a11) und das polyfunktionelle, die Vernetzung bewirkende Monomere (a12), gegebenenfalls zusammen mit den weiteren Comonomeren (a13), in üblicherweise wäßriger Emulsion in an und für sich bekannter Weise bei Temperaturen zwischen 20 und 100°C, vorzugsweise zwischen 50 und 80°C polymerisiert werden. Es können die üblichen Emulgatoren, wie Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate wie Aerosol® OT (Fa. Cyanamid), Ethersulfonate wie Disponil® FES61 (Fa. Henkel) oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,3 bis 5 Gew.-%, insbesondere von

1 bis 2 Gew.-%, bezogen auf die bei der Herstellung des Kerns (a1) eingesetzten Monomeren, einzusetzen. Im allgemeinen wird bei einem Wasser- zu Monomerenverhältnis von 2:1 bis 0,7:1 gearbeitet.

Als Polymerisationsinitiatoren dienen insbesondere die gebräuchlichen Persulfate, es sind jedoch auch Redoxsysteme geeignet. Die Menge an Initiatoren richtet sich in der Regel nach dem gewünschten Molekulargewicht und liegt üblicherweise im Bereich von 0,1 bis 1 Gew.-%, bezogen auf die bei der Herstellung des Kerns (a1) eingesetzten Monomeren.

Als Polymerisationshilfsstoffe können die üblichen Puffersubstanzen, durch welche pH-Werte von vorzugsweise 6 bis 9 eingestellt werden - z.B. Natriumbicarbonat und Natriumpyrophosphat-, sowie 0 bis 3 Gew.-% eines Molekulargewichtsreglers - wie Mercaptane, Terpinole oder dimeres alpha-Methylstyrol - bei der Polymerisation verwendet werden.

Die genauen Polymerisationsbedingungen, insbesondere Art, Dosierung und Menge des Emulgators, werden in der Regel innerhalb der oben angegebenen Bereiche im einzelnen so bestimmt, daß der erhaltene Latex des vernetzten Acrylsäureester-Polymerisats (a1) einen $d_{50}$-Wert im Bereich von 60 bis 1000 nm, vorzugsweise im Bereich von 80 bis 800, und besonders bevorzugt von 100 bis 600 nm besitzt. Die Teilchengrößen-Verteilung des Latex soll dabei vorzugsweise eng sein.

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Die Verfahren hierfür sind bekannt.

Nach einer bevorzugten Ausführungsform hat der Kern ($a_1$) eine Glasübergangstemperatur von kleiner als 0°C.

Die Pfropfkautschukteilchen (A) besitzen üblicherweise eine Teilchengröße ($d_{50}$) im Bereich von 60 bis 1500, bevorzugt von 100 bis 1200 nm.

Um eine hohe Zähigkeit der Formmasse zu erreichen, werden in einer bevorzugten Ausführungsform Pfropfkautschukteilchen (A) mit einer Teilchengröße (dso) im Bereich von 200 nm bis 1000 nm eingesetzt.

In einer weiteren bevorzugten Ausführungsform wird eine Mischung verschieden großer Pfropfkautschukteilchen (A) mit einer bimodalen Teilchengrößenverteilung verwendet. Besonders bevorzugt haben dabei 0,5 bis 99,5 Gew.-% dieser Mischung eine Teilchengröße ($d_{50}$) mit einem mittleren Durchmesser im Bereich von 200 bis 1000 nm, und von 99,5 bis 0,5 Gew.-% der Mischung eine Teilchengröße ($d_{50}$) mit einem mittleren Durchmesser im Bereich von 60 bis 190 nm.

Der chemische Aufbau der beiden Pfropfmischpolymerisate ist vorzugsweise derselbe, obwohl die Hülle des grobteiligen Pfropfmischpolymerisates insbesondere auch zweistufig aufgebaut sein kann.

Die Herstellung der Pfropfhülle (Komponente (a2)) erfolgt in der Regel ebenfalls nach bekannten Polymerisationsverfahren wie Emulsions-, Masse-, Lösungs- oder Suspensionspolymerisation, bevorzugt in wäßriger Emulsion in Gegenwart einer wäßrigen Emulsion des Kerns (a1) (s. DE-B-1,260,135, DE-A 3,149,358 und DE-B-11 64 080). In einer bevorzugten Ausführungsform führt man die Pfropfcopolymerisation im gleichen System durch wie die Polymerisation des Kerns (a1), wobei, falls erforderlich, weiterer Emulgator und Initiator zugegeben werden können. Diese müssen mit den zur Herstellung des Kerns (a1) verwendeten Emulgatoren bzw. Initiatoren nicht identisch sein. Emulgator, Initiator und Polymerisationshilfsstoffe können jeweils allein oder in Mischung zur Emulsion des Kerns (a1) vorgelegt werden. Es kann jede mögliche Kombination von Vorlage und Zulauf einerseits und Initiator, Emulgator und Polymerisationshilfsmittel andererseits in Frage kommen. Die bevorzugten Ausführungsformen sind dem Fachmann bekannt. Das aufzupfropfende Monomer bzw. Monomergemisch kann dem Reaktionsgemisch auf einmal, absatzweise in mehreren Stufen oder auch kontinuierlich während der Polymerisation zugegeben werden.

Als Komponente (B) setzt man Copolymere ein, die herstellbar sind aus (I) 40 bis 75 Gew.-% Ethylen, 5 bis 20 Gew.-% Kohlenmonoxid und 20 bis 40 Gew.-% n-Butylacrylat, beispielsweise als ELVALOY® HP-4051 (DuPont) auf dem Markt erhältlich, oder (II) 50 bis 98,9 Gew.-% Ethylen, 1 bis 45 Gew.-% n-Butylacrylat, 0,1 bis 20 Gew.-% Methacryl- und/oder Acrylsäure und/oder Maleinsäureanhydrid.

Die Herstellung der Copolymere (B) erfolgt in an sich bekannter Weise (s. US-A-2,897,183 und US-A-5,057,593). Üblicherweise erfolgt dabei die Herstellung durch radikalische Polymerisation. Als Initiatoren verwendet man in der Regel Peroxide wie Laurylperoxid, tert. Butylperacetat, tert. Butylperoxypivalat, Di-tert.-butylperoxid, Di-(sec.-butyl) peroxydicarbonat, tert.-Butylperoctoat und tert.-Butylperisononanoat, vorzugsweise tert.-Butylperoxypivalat und tert.-Butylperisononanoat. Des weiteren sind im allgemeinen Azo-gruppenhaltige Initiatoren geeignet wie Azobisisobutyronitril.

Die Wahl des geeigneten Initiators macht man üblicherweise von der zu wählenden Polymerisationstemperatur abhängig, die in der Regel im Bereich von 100 bis 300, vorzugsweise von 130 bis 280°C liegt. Den Druck während der Polymerisation wählt man in der Regel im Bereich von 100 bis 400, vorzugsweise von 150 bis 250 MPa. Die Menge an Initiator wählt man im allgemeinen im Bereich von 1 bis 50, bevorzugt von 2 bis 20 Mol je $10^6$ Mol der eingesetzten Menge an polarem Copolymer.

Die Polymerisation führt man üblicherweise in einem kontinuierlich arbeitenden Rührreaktor durch. Ein solcher Rührreaktor ist beispielsweise in der US-A-2,897,183 beschrieben. Die Reaktionsdauer liegt in der Regel im Bereich

von 30 bis 1, vorzugsweise von 5 bis 2 min. Die Verwendung eines Lösungsmittels ist nach den bisherigen Beobachtungen optional.

Als vinylaromatisches Monomer (Komponente (c1)) setzt man Styrol, die substituierten Styrole der allgemeinen Formel (I), die als Komponente (a21) bereits genannt wurden, oder die unter Komponente (a21) genannten $C_1$-$C_8$-Alkylester der Methacryl- oder Acrylsäure ein. Bevorzugt verwendet man Styrol, alpha-Methylstyrol und p-Methylstyrol.

Als monofunktionelle Comonomere (Komponente (c2)) kann man gewünschtenfalls Monomere einsetzen, die bereits als Komponente (a22) genannt wurden. Des weiteren kann man gewünschtenfalls die unter Komponente (a21) genannten $C_1$-$C_8$-Alkylester der Methacryl- und Acrylsäure mit den unter Komponente (a21) genannten Monomeren gemischt als Komponente (c2) einsetzen.

In einer bevorzugten Ausführungsform setzt man eine Mischung von Styrol ("S") und Acrylnitril ("AN"), S und $\alpha$-Methylstyrol, optional mit Methylmethacrylat oder Maleinimiden gemischt, oder Methylmethacrylat, gewünschtenfalls mit Methylacrylat, ein.

Die Polymerisate der Komponente (C) sind in der Regel bekannt und nach an sich bekannten Methoden zugänglich (s. Kunststoff-Handbuch, Vieweg-Daumiller, Band V (Polystyrol), Carl-Hanser-Verlag, München 1969, Seite 124, Zeilen 12ff). Die Polymerisation führt man in der Regel radikalisch in Emulsion, Suspension, Lösung oder Masse durch. Im allgemeinen weisen die Polymerisate (C) Viskositätszahlen (VZ) (gemessen an einer 0,5 gew.-%igen Lösung in Dimethylformamid bei einer Temperatur von 23°C [$\eta$spec/C in $cm^3/g$] im Bereich von 40 bis 160 auf, was mittleren Molekulargewichten $M_w$ von 40 000 bis 2 000 000 entspricht.

Als weitere Komponente D) können die erfindungsgemäßen thermoplastischen Formmassen bis zu 50 Gew.-%, insbesondere 0,1 bis 20 Gew.-%, bezogen auf die Gesamtmasse (A) + (B) + (C), faser- oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel und Antistatika werden üblicherweise in Mengen von 0,01 bis 5 Gew.-% verwendet, Verstärkungsmittel wie Kohlenstoffasern und Glasfasern hingegen im allgemeinen im Bereich von 5 bis 40 Gew.-%.

Weiterhin können Füll- oder Verstärkungsstoffe wie Glaskugeln, Mineralfasern, Whisker, Aluminiumoxidfasern, Glimmer, Quarzmehl und Wollastonit zugesetzt werden.

Die erfindungsgemäßen Formmassen können ferner weitere Zusatzstoffe enthalten, die für Styrol/Acrylnitril-(SAN)-Polymerisate und Pfropfmischpolymerisate auf Basis von Acrylnitril/Styrol/ Acrylester-(ASA) oder deren Mischungen typisch und gebräuchlich sind. Als solche Zusatzstoffe seien beispielsweise genannt: Farbstoffe, Pigmente, Antistatika, Antioxidantien und insbesondere die Schmiermittel, die für die Weiterverarbeitung der Formmasse, z.B. bei der Herstellung von Formkörpern bzw. Formteilen erforderlich sind, insbesondere bis zu 10 Gew.-% Weichmacher und gewünschtenfalls antistatisch wirksame polare Copolymere wie Ethylenoxid/Propylenoxid-Copolymere.

Die Herstellung der erfindungsgemäßen thermoplastischen Formmassen erfolgt üblicherweise nach an sich bekannten Verfahren durch Mischen der Komponenten (A), (B) und gewünschtenfalls (C) und/oder (D). Es kann vorteilhaft sein, einzelne Komponenten vorzumischen. Auch das Mischen der Komponenten in Lösung und Entfernen der Lösungsmittel ist möglich. Vorzugsweise geschieht jedoch das Mischen der Komponenten bei Temperaturen im Bereich von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Die erfindungsgemäßen thermoplastischen Formmassen können nach den bekannten Verfahren der Thermoplastverarbeitung bearbeitet werden, also z.B, durch Extrudieren, Spritzgießen, Kalandrieren, Hohlkörperblasen, Pressen oder Sintern.

In einer weiteren bevorzugten Ausführungsform stellt man lederartige aussehende, halogenfreie, alterungsstabile und nur eine geringe Menge an flüchtigen Bestandteilen enthaltende Folien durch üblicherweise Kalandrieren und gewünschtenfalls anschließendem Tiefziehen der Folien her, indem man als Komponente (B) ein Copolymer, hergestellt aus

45 bis 55 Gew.-% Ethylen,
11 bis 15 Gew.-% Kohlenmonoxid und
30 bis 36 Gew.-% n-Butylacrylat

gemäß der US-A-2,897,183 oder US-A-5,057,593, und als Komponente (C) ein Copolymer, hergestellt durch kontinuierliche Lösungspolymerisation von

65 Gew.-% Styrol und
35 Gew.-% Acrylnitril

mit einer Viskositätszahl von 80 ml/g (gemessen an einer 0,5 gew.-%igen Lösung in Dimethylformamid bei 23°C),

einsetzt. Als Komponente (A) setzt man bevorzugt ein Pfropfcopolymerisat mit einem Kern aus im wesentlichen n-Butylacrylat, das mit Tricyclodecenylacrylat vernetzt wird, und einer Pfropfhülle, hergestellt aus 60 bis 90 Gew.-% Styrol und 40 bis 10 Gew.-% Acrylnitril, gemäß der Lehre aus der DE-A-3,149,358, ein. Solche erfindungsgemäßen Folien verwendet man bevorzugt für die Innenausstattung von Nutzfahrzeugen wie Automobilen, Flugzeugen, Schiffen und Zügen.

Die aus den erfindungsgemäßen thermoplastischen Formmassen herstellbaren Folien weisen gegenüber solchen des Standes der Technik ein ausgewogenes Verhältnis von Reißfestigkeit, Reißdehnung, Weiterreißfestigkeit, Härte und Farbstabilität bei der Verarbeitung auf.

Beispiele

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die' integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem dso-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

Es wurden folgende Komponenten eingesetzt:

A. Ein grobteiliges Pfropfpolymerisat, das folgendermaßen hergestellt wurde:

Zu einer Vorlage aus 1,5 g des nach EP-B-6503, S. 12, Z. 55 bis S. 13, Z. 22 hergestellten feinteiligen Butylacrylatlatex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer $C_{12}$-$C_{18}$-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 Gew.-%. Die mittlere Teilchengröße ($d_{50}$) (Gewichtsmittel des Latex) wurde zu 430 nm ermittelt, die Teilchengrößenverteilung war eng (Q = 0,1).

150 g des oben hergestellten Latex wurden mit 20 g Styrol und 60 g, Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße ($d_{50}$) der Latexteilchen betrug 510 nm.

B1) Ein Copolymerisat, hergestellt aus Ethylen, Kohlenmonoxid und 30 Gew.-% n-Butylacrylat (Elvaloy® HP-4051 der Fa. DuPont; analog zu Beispiel 2 in der US-A-5,057,593 hergestellt).

B2) ein Ethylen-Vinylacetat-Copolymer (Luwax® EVA1 (BASF); Schmelzviskosität bei 140°C 1500 $mm^2/s$).

Als Komponente C wurde ein Copolymerisat, hergestellt aus Styrol und Acrylnitril im Gewichtsverhältnis 65:35 (S: AN), mit einer Viskositätszahl von 80 ml/g (gemessen an einer 0,5 gew.-%igen Lösung in Dimethylformamid bei 23°C) eingesetzt. Die Polymerisation erfolgte durch kontinuierliche Lösungspolymerisation analog zu Kunststoff-Handbuch, Vieweg-Daumiller, Band V (Polystyrol), Carl-Hanser-Verlag, München 1969, S. 124, Zeilen 12ff.

Die Folien wurden durch Mischen auf einem bei 200°C beheizten Walzwerk in einer Stärke von 0,5 mm hergestellt.

Aus diesen Folien wurden Formkörper ausgestanzt und der Zugversuch nach DIN 53504 sowie der Weiterreißversuch nach DIN 53515 durchgeführt.

Die Shore-Härte wurde nach DIN 53505 bestimmt.

Die Wärmeformbeständigkeit Vicat A wurde nach DIN 53460 bestimmt (in °C).

Tabelle 1

| Komponente | 1 | 2 | 3 | 4 | 5 (Vergleich) | 6 (Vergleich) | 7 (Vergleich) (Bsp. 2 aus EP-A 526 813) |
|---|---|---|---|---|---|---|---|
| A | 95 | 90 | 80 | 62 | 95 | 90 | x |
| B1 | 5 | 10 | 9 | 7 | - | - | x |
| B2 | - | - | - | - | 5 | - | x |
| C | - | - | 11 | 31 | - | 10 | x |
| Zugfestigkeit ($N/mm^2$) | 15,0 | 12,4 | 14,3 | 21,2 | 12,2 | 15,0 | 15,0 |
| Reißdehnung (%) | 274 | 213 | 151 | 110 | 201 | 120 | 200 |
| Weiterreißwiderstand (N/mm) | 39,7 | 38,0 | 51,0 | 75,0 | 32,5 | 50 | x |
| Shore-Härte D | 39 | 39 | 46 | 58 | 41 | 48 | 37 |
| Vicat A (°C) | - | 66 | 81 | 101 | - | - | - |

Zur Bestimmung der flüchtigen Bestandteile in lederartigen Folien wurden jeweils 2 g der zu prüfenden Folien aus den Beispielen 2, 3 und 4 in einem Glaszylinder 1 h auf 280°C im Stickstoffstrom erhitzt. Vor und nach dem Versuch wurden die eingesetzten Massen bestimmt. Die Massendifferenz entsprach den Anteilen an flüchtigen Bestandteilen. Aus den erhaltenen Werten kann auch auf das Fogging-Verhalten geschlossen werden: je höher der Masseverlust, d. h. je höher der Anteil an flüchtigen Bestandteilen, desto stärker das Fogging.

Tabelle 2

| Beispiel | Masseverlust [Gew.-%] |
|---|---|
| 2 | 0,67 |
| 3 | 0,75 |
| 4 | 0,82 |
| zum Vergleich | |
| V1 | 1,08 |
| V2 | 2,82 |

Als Vergleichsfolien wurden verwendet:

V1: Folie aus 80 Gew.-Teilen der Komponente (A), 10 Gew.-Teile der Komponente (C) und 10 Gew.-Teile eines Copolymeren, hergestellt aus 90,5 Gew.-% Ethylen und 9,5 Gew.-% Vinylacetat (Schmelzviskosität bei 120°C: 1700 $mm^2/s$; Luwax® EVA2 (BASF)),

V2: Baymoflex® A VPKU 3-2069 A (Bayer AG); Polymerblend auf Basis Acylnitril-Styrol-Acrylatharz:

| | |
|---|---|
| Erweichungstemperatur | ab ca. 90°C |
| Dichte | ca. 1,0 $g/cm^3$ bei 20°C (DIN 53479) |
| Schüttdichte | ca. 250-350 $kg/m^3$ |
| Löslichkeit in Wasser | unlöslich |
| Zündtemperatur | über 400°C (DIN 51794) |

**Patentansprüche**

**1.** Thermoplastische Formmassen, enthaltend im wesentlichen

(A) 20 bis 99 Gew.-% mindestens eines Pfropfcopolymerisates mit einer Teilchengröße ($d_{50}$-Wert) im Bereich von 60 bis 1500 nm, erhältlich im wesentlichen aus

(a1) 30 bis 90 Gew.-% eines Kerns, erhältlich durch Polymerisation eines Monomerengemisches, bestehend im wesentlichen aus

(a11) 80 bis 99,99 Gew.-% mindestens eines $C_1$-$C_{10}$-Alkylesters der Acrylsäure,

(a12) 20 bis 0,01 Gew.-% eines copolymerisierbaren, polyfunktionellen vernetzend wirkenden Monomeren, und gewünschtenfalls darüber hinaus

(a13) Butadien, Isopren oder ein weiteres copolymerisierbares, monoethylenisch ungesättigtes Monomeres oder deren verträgliche Mischungen, und

(a2) 70 bis 10 Gew.-% einer Pfropfhülle, erhältlich durch Polymerisation eines Monomerengemisches in Gegenwart des Kerns (a1), bestehend im wesentlichen aus

(a21) 50 bis 100 Gew.-% einer Styrolverbindung der allgemeinen Formel (I)

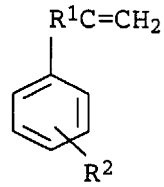

(I)

in der $R^1$ und $R^2$ unabhängig voneinander für Wasserstoff oder $C_1$-$C_8$-Alkyl stehen und/oder eines $C_1$-$C_8$-Alkylesters der Methacryl- oder Acrylsäure,

(a22) 50 bis 0 Gew.-% eines monofunktionellen Comonomeren, und

(B) 80 bis 1 Gew.-% eines Copolymeren, erhältlich aus

I)

40 bis 75 Gew.-% Ethylen,
5 bis 20 Gew.-% Kohlenmonoxid und
20 bis 40 Gew.-% n-Butylacrylat

oder

II)

50 bis 98,9 Gew.-% Ethylen,
1 bis 45 Gew.-% n-Butylacrylat und
0,1 bis 20 Gew.-% Methacrylsäure, Acrylsäure oder Maleinsäure oder eine Mischung aus zwei oder allen dieser Säuren

und

(C) 0 bis 50 Gew.-%, bezogen auf das Gesamtgewicht der Komponenten (A), (B) und (C), eines thermoplastischen Polymerisates, erhältlich durch Polymerisation eines Monomerengemisches, bestehend im wesentlichen aus

(c1) 50 bis 100 Gew.-% eines vinylaromatischen Monomeren und/oder eines $C_1$-$C_8$-Alkylesters der Methacryl- oder Acrylsäure und

(c2) 50 bis 0 Gew.-% eines monofunktionellen Comonomeren.

**2.** Thermoplastische Formmassen gemäß Anspruch 1, dadurch gekennzeichnet, daß die Teilchengröße ($d_{50}$-Wert) der Pfropfcopolymerisate (A) einen mittleren Durchmesser im Bereich von 100 bis 1200 nm aufweist.

**3.** Thermoplastische Formmassen gemäß Anspruch 1 oder 2, dadurch gekennzeichnet, daß die Teilchengrößenverteilung der Komponente (A) bimodal ist.

**4.** Thermoplastische Formmassen nach Anspruch 3, dadurch gekennzeichnet, daß man als Komponente (A) eine Mischung von 0,5 bis 99,5 Gew.-% eines Pfropfcopolymerisates (A) einsetzt, dessen Teilchengröße ($d_{50}$-Wert) einen mittleren Durchmesser im Bereich von 200 bis 1000 nm aufweist, und von 99,5 bis 0,5 Gew.-% eines Pfropfcopolymerisates (A) einsetzt, dessen Teilchengröße ($d_{50}$-Wert) einen mittleren Durchmesser im Bereich von 60 bis 190 nm aufweist.

**5.** Thermoplastische Formmassen gemäß den Ansprüchen 1 bis 4, dadurch gekennzeichnet, daß man die Glasübergangstemperatur des Kerns (a1) kleiner als 0°C wählt.

**6.** Verfahren zur Herstellung von thermoplastischen Formmassen gemäß den Ansprüchen 1 bis 5 in an sich bekannter

Weise, dadurch gekennzeichnet, daß man

(A) 20 bis 99 Gew.-% mindestens eines Pfropfcopolymerisates mit einer Teilchengröße ($d_{50}$-Wert) im Bereich von 60 bis 1500 nm, erhältlich im wesentlichen aus

(a1) 30 bis 90 Gew.-% eines Kerns, erhältlich durch Polymerisation eines Monomerengemisches, bestehend im wesentlichen aus

(a11) 80 bis 99,99 Gew.-% mindestens eines $C_1$-$C_{10}$-Alkylesters der Acrylsäure,

(a12) 20 bis 0,01 Gew.-% eines copolymerisierbaren, polyfunktionellen vernetzend wirkenden Monomeren, und gewünschtenfalls darüber hinaus

(a13) Butadien, Isopren oder ein weiteres copolymerisierbares, monoethylenisch ungesättigtes Monomeres oder deren verträgliche Mischungen, und

(a2) 70 bis 10 Gew.-% einer Pfropfhülle, erhältlich durch Polymerisation eines Monomerengemisches in Gegenwart des Kerns (a1), bestehend im wesentlichen aus

(a21) 50 bis 100 Gew.-% einer Styrolverbindung der allgemeinen Formel (I)

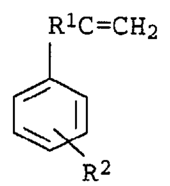

(I)

in der $R^1$ und $R^2$ unabhängig voneinander für Wasserstoff oder $C_1$-$C_8$-Alkyl stehen und/oder eines $C_1$-$C_8$-Alkylesters der Methacryl- oder Acrylsäure, und

(a22) 50 bis 0 Gew.-% eines monofunktionellen Comonomeren, mit

(B) 80 bis 1 Gew.-% eines Copolymeren, erhältlich aus

I)

40 bis 75 Gew.-% Ethylen,
5 bis 20 Gew.-% Kohlenmonoxid und
20 bis 40 Gew.-% n-Butylacrylat

oder

II)

50 bis 98,9 Gew.-% Ethylen,
1 bis 45 Gew.-% n-Butylacrylat und
0,1 bis 20 Gew.-% Methacrylsäure, Acrylsäure oder Maleinsäure oder eine Mischung aus zwei oder allen dieser Säuren

und mit

(C) 0 bis 50 Gew.-%, bezogen auf das Gesamtgewicht der Komponenten (A), (B) und (C), eines thermoplastischen Polymerisates, erhältlich durch Polymerisation eines Monomerengemisches, bestehend im wesentlichen aus

(c1) 50 bis 100 Gew.-% eines vinylaromatischen Monomeren und/oder eines $C_1$-$C_8$-Alkylesters der Me-

thacryl- oder Acrylsäure und

(c2) 50 bis 0 Gew.-% eines monofunktionellen Comonomeren

mischt.

**7.** Verwendung der thermoplastischen Formmassen gemäß den Ansprüchen 1 bis 5, oder hergestellt gemäß Anspruch 6, zur Herstellung von Formkörpern und Folien.

**8.** Formkörper und Folien, erhältlich durch die Verwendung gemäß Anspruch 7.

**9.** Lederartig aussehende Folie, hergestellt durch Mischen von

(A) 20 bis 99 Gew.-% mindestens eines Pfropfcopolymerisates mit einer Teilchengröße ($d_{50}$-Wert) im Bereich von 60 bis 1500 nm, erhältlich im wesentlichen aus

(a1) 30 bis 90 Gew.-% eines Kerns, erhältlich durch Polymerisation eines Monomerengemisches, bestehend im wesentlichen aus

(a11) 80 bis 99,99 Gew.-% n-Butylacrylat,

(a12) 20 bis 0,01 Gew.-% Tricyclodecenylacrylat, und

(a2) 70 bis 10 Gew.-% einer Pfropfhülle, erhältlich durch Polymerisation eines Monomerengemisches in Gegenwart des Kerns (a1), bestehend im wesentlichen aus

(a21) 60 bis 90 Gew.-% Styrol und

(a22) 40 bis 10 Gew.-% Acrylnitril, und

(B)

80 bis 1 Gew.-% eines Copolymeren, hergestellt aus
45 bis 55 Gew.-% Ethylen,
11 bis 15 Gew.-% Kohlenmonoxid und
30 bis 36 Gew.-% n-Butylacrylat, und

(C) 0 bis 50 Gew.-%, bezogen auf das Gesamtgewicht der Komponenten (A), (B) und (C), eines Copolymers, hergestellt durch kontinuierliche Lösungspolymerisation von

(c1) 65 Gew.-% Styrol und
(c2) 35 Gew.-% Acrylnitril,

und anschließendem Kalandrieren zu Folien.

**10.** Verwendung der lederartig aussehenden Folien gemäß Anspruch 9 zur Innenausstattung von Nutzfahrzeugen, Flugzeugen, Schiffen und Zügen.

**Claims**

**1.** A thermoplastic molding material containing essentially

(A) from 20 to 99 % by weight of at least one graft copolymer having a particle size ($d_{50}$ value) of from 60 to 1500 nm, obtainable essentially from

(a1) from 30 to 90 % by weight of a core obtainable by polymerization of a monomer mixture consisting essentially of

(a11) from 80 to 99.99 % by weight of at least one $C_1$-$C_{10}$-alkyl ester of acrylic acid,

(a12) from 20 to 0.01 % by weight of a copolymerizable, polyfunctional crosslinking monomer and, if desired, additionally

(a13) butadiene, isoprene or a further copolymerizable, monoethylenically unsaturated monomer or a compatible mixture thereof, and

(a2) from 70 to 10 % by weight of a graft shell obtainable by polymerization of a monomer mixture in the presence of the core (a1), consisting essentially of

(a21) from 50 to 100 % by weight of a styrene compound of the formula (I)

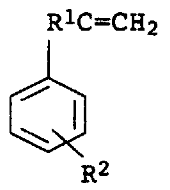

(I)

where $R^1$ and $R^2$, independently of one another, are each hydrogen or $C_1$-$C_8$-alkyl and/or of a $C_1$-$C_8$-alkyl ester of methacrylic or acrylic acid,

(a22) from 50 to 0 % by weight of a monofunctional comonomer, and

(B) from 80 to 1 % by weight of a copolymer obtainable from

I)

from 40 to 75 % by weight of ethylene,
from 5 to 20 % by weight of carbon monoxide and
from 20 to 40 % by weight of n-butyl acrylate

or

II)

from 50 to 98.9 % by weight of ethylene,
from 1 to 45 % by weight of n-butyl acrylate and
from 0.1 to 20 % by weight of methacrylic acid,
acrylic acid or maleic acid or a mixture of two or all of these acids

and

(C) from 0 to 50 % by weight, based on the total weight of components (A), (B) and (C), of a thermoplastic polymer obtainable by polymerization of a monomer mixture consisting essentially of

(c1) from 50 to 100 % by weight of a vinylaromatic monomer and/or of a $C_1$-$C_8$-alkyl ester of methacrylic or acrylic acid and

(c2) from 50 to 0 % by weight of a monofunctional comonomer.

**2.** A thermoplastic molding material as claimed in claim 1, wherein the mean particle diameter ($d_{50}$ value) of the graft copolymers (A) is from 100 to 1200 nm.

**3.** A thermoplastic molding material as claimed in claim 1 or 2, wherein the particle size distribution of component

(A) is bimodal.

**4.** A thermoplastic molding material as claimed in claim 3, wherein a mixture of from 0.5 to 99.5 % by weight of a graft copolymer (A) whose mean particle diameter ($d_{50}$ value) is from 200 to 1000 nm and from 99.5 to 0.5 % by weight of a graft copolymer (A) whose mean particle diameter ($d_{50}$ value) is from 60 to 190 nm is used as component (A).

**5.** A thermoplastic molding material as claimed in any of claims 1 to 4, wherein the glass transition temperature of the core (a1) is chosen to be less than 0°C.

**6.** A process for the preparation of a thermoplastic molding material as claimed in any of claims 1 to 5 in a manner known per se, wherein

(A) from 20 to 99 % by weight of at least one graft copolymer having a particle size ($d_{50}$ value) of from 60 to 1500 nm, obtainable essentially from

(a1) from 30 to 90 % by weight of a core obtainable by polymerization of a monomer mixture consisting essentially of

(a11) from 80 to 99.99 % by weight of at least one $C_1$-$C_{10}$-alkyl ester of acrylic acid,

(a12) from 20 to 0.01 % by weight of a copolymerizable, polyfunctional crosslinking monomer and, if desired, additionally

(a13) butadiene, isoprene or a further copolymerizable, monoethylenically unsaturated monomer or a compatible mixture thereof, and

(a2) from 70 to 10 % by weight of a graft shell, obtainable by polymerization of a monomer mixture in the presence of the core (a1) and consisting essentially of

(a21) from 50 to 100 % by weight of a styrene compound of the formula (I)

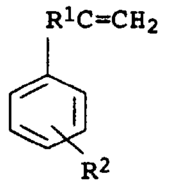

(I)

where $R^1$ and $R^2$, independently of one another, are each hydrogen or $C_1$-$C_8$-alkyl, and/or of a $C_1$-$C_8$-alkyl ester of methacrylic or acrylic acid, and

(a22) from 50 to 0 % by weight of a monofunctional comonomer, are mixed with

(B) from 80 to 1 % by weight of a copolymer, obtainable from

I)

from 40 to 75 % by weight of ethylene,
from 5 to 20 % by weight of carbon monoxide and
from 20 to 40 % by weight of n-butyl acrylate

or

II)

from 50 to 98.9 % by weight of ethylene,
from 1 to 45 % by weight of n-butyl acrylate and
from 0.1 to 20 % by weight of methacrylic acid,
acrylic acid or maleic acid or a mixture of two or all of these acids

and with

(C) from 0 to 50 % by weight, based on the total weight of components (A), (B) and (C), of a thermoplastic polymer obtainable by polymerization of a monomer mixture consisting essentially of

(c1) from 50 to 100 % by weight of a vinylaromatic monomer and/or of a $C_1$-$C_8$-alkyl ester of methacrylic or acrylic acid and

(c2) from 50 to 0 % by weight of a monofunctional comonomer.

**7.** Use of the thermoplastic molding material as claimed in any of claims 1 to 5, or prepared as claimed in claim 6, for the production of moldings and films.

**8.** A molding or film obtainable by the use as claimed in claim 7.

**9.** A film having a leather-like appearance and prepared by mixing

(A) from 20 to 99 % by weight of at least one graft copolymer having a particle size ($d_{50}$ value) of from 60 to 1500 nm, obtainable essentially from

(a1) from 30 to 90 % by weight of a core obtainable by polymerization of a monomer mixture consisting essentially of

(a11) from 80 to 99.99 % by weight of n-butyl acrylate,

(a12) from 20 to 0.01 % by weight of a tricyclodecenyl acrylate, and

(a2) from 70 to 10 % by weight of a graft shell obtainable by polymerization of a monomer mixture in the presence of the core (a1) and consisting essentially of

(a21) from 60 to 90 % by weight of styrene and

(a22) from 40 to 10 % by weight of acrylonitrile, and

(B)

from 80 to 1 % by weight of a copolymer prepared from 45 to 55 % by weight of ethylene,
from 11 to 15 % by weight of carbon monoxide and
from 30 to 36 % by weight of n-butyl acrylate, and

(C) from 0 to 50 % by weight, based on the total weight of components (A), (B) and (C), of a copolymer prepared by continuous solution polymerization of

(c1) 65 % by weight of styrene and
(c2) 35 % by weight of acrylonitrile,

and subsequently carrying out calendering to give films.

**10.** Use of a film having a leather-like appearance, as claimed in claim 9, for the interior trim of commercial vehicles, aircraft, ships and trains.

## Revendications

1. Masses à mouler thermoplastiques, qui contiennent en essence :

(A) 20 à 99% en poids d'au moins un copolymère de greffage d'un calibre des particules (valeur $d_{50}$) qui se situe dans la plage de 60 à 1500 nm, que l'on peut obtenir essentiellement à partir de

(a1) 30 à 90% en poids d'un noyau, que l'on peut obtenir par la polymérisation d'un mélange de monomères, qui se compose essentiellement de
(a11) 80 à 99,9% en poids d'au moins un ester alkylique en $C_1$ à $C_{10}$ de l'acide acrylique,
(a12) 20 à 0,01 en poids d'un monomère à activité réticulante, polyfonctionnel, copolymérisable et éventuellement, en outre,
(a13) de butadiène, d'isoprène, ou d'un autre monomère mono-éthyléniquement insaturé copolymérisable, ou de leurs mélanges compatibles, et
(a2) 70 0 10% en poids d'une gaine ou enveloppe de greffage, que l'on peut obtenir par la polymérisation d'un mélange de monomères en présence du noyau (a1), qui se compose essentiellement de
(a21) 50 à 100% en poids d'un composé du styrène de la formule générale (I):

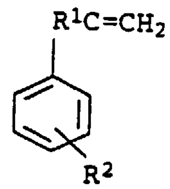

(I)

dans laquelle $R^1$ et $R^2$ représentent chacun indépendamment l'un de l'autre, un atome d'hydrogène ou un radical alkyle en $C_1$ à $C_6$ et/ou un ester alkylique en $C_1$ à $C_8$ de l'acide méthacrylique ou de l'acide acrylique,
(a22) 50 à 0% en poids d'un comonomère monofonctionnel, et

(B) 80 à 1% en poids d'un copolymère, que l'on peut obtenir à partir de

(I)

40 à 75% en poids d'éthylène,
5 à 20% en poids de monoxyde de carbone, et
20 à 40% en poids d'acrylate de n-butyle,

ou

II)

50 à 98,9% en poids d'éthylène,
1 à 45% en poids d'acrylate de n-butyle, et
0,1 à 20% en poids d'acide méthacrylique, d'acide acrylique ou d'acide maléique ou d'un mélange de deux ou de la totalité de ces acides,

et

(C) 0 à 50% en poids, par rapport au poids total des composants (A), (B) et (C), d'un polymère thermoplastique, que l'on peut obtenir par la polymérisation d'un mélange de monomères, qui se compose essentiellement de

(c1) 50 à 100% en poids d'un monomère vinylaromatique et/ou d'un ester alkylique en $C_1$ à $C_8$ de l'acide méthacrylique ou de l'acide acrylique, et
(c2) 50 à 0% en poids d'un comonomère monofonctionnel.

2. Masses à mouler thermoplastiques suivant la revendication 1, caractérisées en ce que la calibre des particules (valeur $d_{50}$) du copolymère de greffage (A) présente un diamètre moyen qui varie de 100 à 1200 nm.

**3.** Masses à mouler thermoplastiques suivant la revendication 1 ou 2, caractérisées en ce que la répartition granulométrique du composant (A) est bimodale.

**4.** Masses à mouler thermoplastiques suivant la revendication 3, caractérisées en ce que l'on utilise, à titre de composant (A), un mélange de 0,5 à 99,5% en poids d'un copolymère de greffage (A), dont le calibre des particules (valeur $d_{50}$) présente un diamètre moyen de 200 à 1000 nm, et de 99,5 à 0,5% en poids d'un copolymère de greffage (A), dont le calibre des particules (valeur $d_{50}$) présente un diamètre moyen qui varie de 60 à 190 nm.

**5.** Masses à mouler thermoplastiques suivant les revendications à 4, caractérisées en ce que l'on choisit la température de transition vitreuse du noyau (a1) inférieure à 0°C.

**6.** Procédé de préparation de masses à mouler thermoplastiques suivant les revendications 1 à 5, de manière en soi connue, caractérisé en ce qu'on mélange

(A) 20 à 99% en poids d'au moins un copolymère de greffage d'un calibre des particules (valeur $d_{50}$) qui se situe dans la plage de 60 à 1500 nm, que l'on peut obtenir essentiellement à partir de

(a1) 30 à 90% en poids d'un noyau, que l'on peut obtenir par la polymérisation d'un mélange de monomères, qui se compose essentiellement de
(a11) 80 à 99,9% en poids d'au moins un ester alkylique en $C_1$ à $C_{10}$ de l'acide acrylique,
(a12) 20 à 0,01 en poids d'un monomère à activité réticulante, polyfonctionnel, copolymérisable et éventuellement, en outre,
(a13) de butadiène, d'isoprène, ou d'un autre monomère mono-éthyléniquement insaturé copolymérisable, ou de leurs mélanges compatibles, et
(a2) 70 à 10% en poids d'une gaine ou enveloppe de greffage, que l'on peut obtenir par la polymérisation d'un mélange de monomères en présence du noyau (a1), qui se compose essentiellement de
(a21) 50 à 100% en poids d'un composé du styrène de la formule générale (I) :

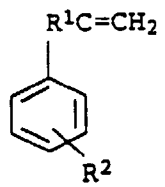

(I)

dans laquelle $R^1$ et $R^2$ représentent chacun indépendamment l'un de l'autre, un atome d'hydrogène ou un radical alkyle en $C_1$ à $C_8$ et/ou un ester alkylique en $C_1$ à $C_8$ de l'acide méthacrylique ou de l'acide acrylique,
(a22) 50 à 0% en poids d'un comonomère monofonctionnel, et

(B) 80 à 1% en poids d'un copolymère, que l'on peut obtenir à partir de

(I)

40 à 75% en poids d'éthylène,
5 à 20% en poids de monoxyde de carbone, et
20 à 40% en poids d'acrylate de n-butyle,

ou

II)

50 à 98,9% en poids d'éthylène,
1 à 45% en poids d'acrylate de n-butyle, et
0,1 à 20% en poids d'acide méthacrylique, d'acide acrylique ou d'acide maléique ou d'un mélange de deux ou de la totalité de ces acides,

et

(C) 0 à 50% en poids, par rapport au poids total des composants (A), (B) et (C), d'un polymère thermoplastique, que l'on peut obtenir par la polymérisation d'un mélange de monomères, qui se compose essentiellement de

(c1) 50 à 100% en poids d'un monomère vinylaromatique et/ou d'un ester alkylique en $C_1$ à $C_8$ de l'acide méthacrylique ou de l'acide acrylique, et
(c2) 50 à 0% en poids d'un comonomère monofonctionnel.

**7.** Utilisation des masses à mouler thermoplastiques suivant l'une quelconque des revendications 1 à 5, ou préparées selon la revendication 6, en vue de la fabrication d'articles moulés et de feuilles.

**8.** Articles moulés et feuilles que l'on peut obtenir par l'utilisation selon la revendication 7.

**9.** Feuille ayant l'aspect du cuir, que l'on prépare par le mélange de

(A) 20 à 99% en poids d'au moins un copolymère de greffage d'un calibre des particules (valeur $d_{50}$) qui se situe dans la plage de 60 à 1500 nm, que l'on peut obtenir essentiellement à partir de

(a1) 30 à 90% en poids d'un noyau, que l'on peut obtenir par la polymérisation d'un mélange de monomères, qui se compose essentiellement de
(a11) 80 à 99,99% en poids d'acrylate de n-butyle,
(a12) 20 à 0,01% en poids d'acrylate de tricyclodécényle, et
(a2) 70 à 10% en poids d'une gaine ou enveloppe de greffage, que l'on peut obtenir par la polymérisation d'un mélange de monomères en présence du noyau (a1), qui se compose essentiellement de
(a21) 60 à 90% en poids de styrène, et
(a22) 40 à 10% en poids d'acrylonitrile, et

(B) 80 à 1% en poids d'un copolymère préparé à partir de

45 à 55% en poids d'éthylène,
11 à 15% en poids de monoxyde de carbone, et
30 à 36% en poids d'acrylate de n-butyle, et

(C) 0 à 50% en poids, par rapport au poids total des composants (A), (B) et (C), d'un copolymère préparé par la polymérisation continue en solution de

(c1) ) 65% en poids de styrène, et
(c2) 35% en poids d'acrylonitrile,

et calandrage subséquent en feuilles.

**10.** Utilisation de feuilles ayant l'aspect du cuir suivant la revendication 9 pour le gamissage intérieur de véhicules utilitaires, d'avions, de bateaux et de trains.